# EUROPEAN PATENT SPECIFICATION

(11) **EP 0 713 273 B1**
(45) Date of publication and mention of the grant of the patent: **04.04.2001**
(21) Application number: 95117855.7
(22) Date of filing: 13.11.1995
(51) Int. Cl.: H01S 3/06

(54) **Optical fiber amplifier**
Faseroptischer Verstärker
Amplificateur à fibre optique

(30) Priority: 16.11.1994 JP 28187494; 16.11.1994 JP 28187594
(43) Date of publication of application: 22.05.1996
(73) Proprietor: Oki Electric Industry Company, Limited, Tokyo 105 (JP)
(72) Inventor: Suzuki, Mikiya, c/o Oki Electric Indutry Co., Ltd., Tokyo (JP); Shikii, Shigeru, c/o Oki Electric Indutry Co. Ltd., Tokyo (JP); Ozeki, Yukihiro, c/o Oki Electric Indutry Co. Ltd., Tokyo (JP); Aoki, Shusei, c/o Oki Electric Indutry Co., Ltd., Tokyo (JP)
(74) Representative: Betten & Resch

(56) References cited:
- WO-A-91/18434
- SU S F: "Gain equalization in multiwavelength lightwave systems using acoustooptic tunable filters" IEEE PHOTONICS TECHNOLOGY LETTERS, vol. 4, no. 3, 1 March 1992, pages 269-271, XP000264922
- GILES C R ET AL: "Transient gain and cross talk in erbium-doped fiber amplifiers" OPTICS LETTERS, vol. 14, no. 16, 15 August 1989, pages 880-882, XP000038734
- KYO INOUE ET AL: "Tunable gain equalization using a Mach-Zehnder optical filter in multistage fiber amplifiers" IEEE PHOTONICS TECHNOLOGY LETTERS, vol. 3, no. 8, 1 August 1991, pages 718-720, XP000223738
- PATENT ABSTRACTS OF JAPAN vol. 015, no. 490 (E-1144), 11 December 1991 & JP 03 212984 A (MITSUBISHI ELECTRIC CORP), 18 September 1991,

## Description

### FIELD OF THE INVENTION

The invention relates to an optical fiber amplifier which directly amplifies an optical signal.

### BACKGROUND OF THE INVENTION

The invention especially applies to an erbium (Er3⁺)-doped fiber amplifier (EDFA) which utilized an erbium-doped optical fiber (EDF). In a conventional EDFA, one end of the EDF is connected to input, and the other side is connected to output, through each optical isolators. A pumping illumination source provides pumping illumination for the EDF through a photocoupler. Then, the pumping illumination is absorbed by the EDF and enough population inversion can be raised.

When an input light signal is introduced into the excited EDF from the input-side optical fiber, the input light signal is gradually amplified by a stimulated emission of the EDF and the amplified input light signal is outputted to the output-side optical fiber.

Here, the wavelength of the light signal is selected on bands 1550∼1560nm whose loss in a silica fiber is the smallest. Moreover, a wavelength of the pumping illumination is selected on bands 980nm or 1480nm which are absorption bands of the EDF. The EDFA has an amplification region on bands 1530∼1560nm, and the EDFA is effective for narrow band light signal transmission by single wavelength. But, in order to utilize effectiveness an optical fiber transmission line, a wavelength-divisional-multiplex(WDM) system which transmits multiple wavelength channels together is desirable.

When the EDFA is applied to the WDM system, improvement of wavelength-to-gain-deviation characteristic(: gain equalizing of any wavelengths) is important. Especially, a signal power deviation between each wavelength after transmission becomes fairly large, unless each gain of every wavelength channel at every EDFA repeater are substantially equal. As a result, as the number of repeaters getting large, transmission distance us limited by the S/N ratio of a wavelength signal which has minimum amplitude.

For this reason, when a scattering of signal power and S/N ratio between each wavelength channel is compensated, the gain equalizing of the EDFA is an indispensable technique. The gain equalizing techniques of the EDFA are already proposed multitudinously.

For example, they are known that the way gain dependence of wavelength is equalized by an optical filter, the way gain characteristics of the EDF is controlled by doped aluminum (Al) concentration and the way cools the EDF into low-temperature, as they are effective for the gain equalizing. If these ways were used, through the gain equalizing can be achieved by bands 1540 ∼1560nm, however, they can not equivalent to broader bands. Moreover, in practice, a distance between repeaters is not fixed and a light signal power which is turned into the EDFA is not also fixed, and these points also make gain equalization of the broader bands difficult.

So, it is desired for an optical fiber amplifier which can realize gain equalization about broader input signal power and wavelength bands.

From "Optics Letters, vol. 14, no. 16, August 1989, pages 880-882" an optical fiber amplifier having an erbium doped optical fiber for amplifying a light signal, a pump laser source for providing pumping illumination and detecting means for detecting the input light signal is known. A low frequency control loop is used for feed-forward compensation of the optical amplifier. The pump power is automatically adjusted in response to the total input signal, resulting in a constant amplifier gain. Both the time-varying and steady-state gain saturation can be corrected with an attendant reduction in saturation induced cross talk.

### SUMMARY OF THE INVENTION

The invention according to claim 1 is, an optical fiber amplifier comprising an optical fiber for direct amplifying a light signal, a pumping illumination source for providing the optical fiber with pumping illumination, detecting means for detecting the input light signal, gain equalizing means for equalizing the input light signal wavelength dependence of the fiber amplifier gain and a gain equalizing means controller for controlling the gain equalizing means based on the detected input light signal which is detected by the detecting means, so that the optical fiber amplifier can realize gain equalization about broader input signal power and wavelength bands. The gain equalizing means comprises a filter having an adjustable cutoff wavelength.

### BRIEF DESCRIPTION OF THE DRAWINGS

FIG.1 is a schematic diagram of a first embodiment of the invention.

FIG.2 is a schematic diagram of the LWPF 5 of the FIG.1.

FIG.3 is a modified LWPF 5a.

FIG.4 is a graph showing input-signals-power-to-gain characteristics of the first embodiment.

FIG.5 is a schematic diagram of a second embodiment of the invention.

FIG.6 is a schematic diagram of a third embodiment of the invention.

FIG.7 is a schematic diagram of an optical fiber amplifier which is not an embodiment of the invention.

FIGs. 8(a) and 8(b) are fictitious graphs showing functions of the optical fiber amplifier of fig.7.

FIGs. 9(a) and 9(b) are graphs showing input-signals-power-to-gain characteristics of the optical fiber amplifier of fig.7.

FIG.10 is a graph showing input-signals-power-to-gain characteristics of the optical fiber amplifier of fig.7.

FIG.11 is a graph showing input-signals-power-to-gain characteristics of the optical fiber amplifier of fig.7.

FIG.12 is a schematic diagram of a fourth embodiment of the invention.

### DETAILED DESCRIPTION OF THE PREFERRED EMBODIMENTS

### (A) FIRST EMBODIMENT

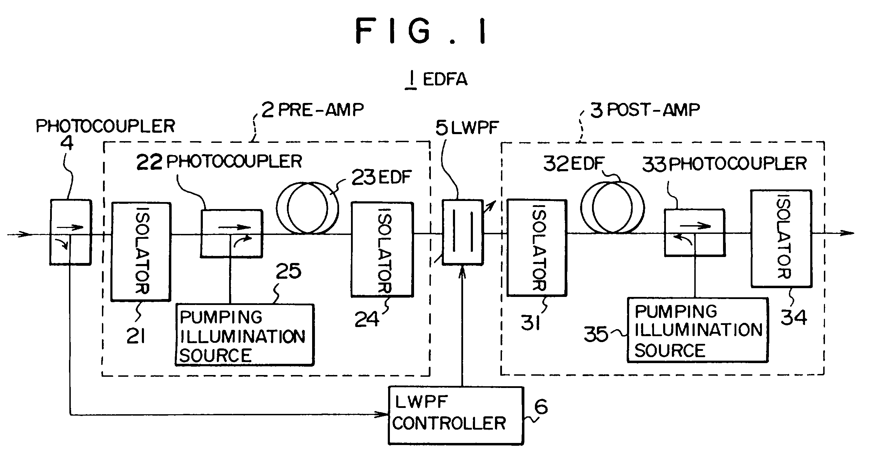

FIG.1 is a schematic diagram of a first embodiment of the invention. An EDFA 1 in FIG. 1 employs multistage amplifier, and is comprised of a front-stage optical fiber amplifier(pre-amp 2) and a rear-stage optical fiber amplifier(post-amp 3), which are connected in series. The pre-amp 2 is adopted as the forward pumping. In the pre-amp 2, an optical isolator 21, a photocoupler 22 which has a wavelength selectivity, an Al-5 Wt.% doped EDF 23 and an optical isolator 24 are arranged on along a route of a light signal in series. A pumping illumination source 25 is comprised of a laser diode(LD) and connects with the photocoupler 22. The pumping illumination source 25 provides the EDF 23 with pumping illumination through the photocoupler 22.

A light signal which is entered in the EDF 23 is gradually amplified by stimulated emission of the EDF 23. On the other hand, the post-amp 3 is adopted as the backward pumping.

In the post-amp 3, an optical isolator 31, an Al-5 Wt.% doped EDF 32, a photocoupler 33 which has a wavelength selectivity and an optical isolator 34 are arranged on along a route of a light signal in series. A pumping illumination source 35 is comprised of a laser diode(LD) and connects with the photocoupler 33. The pumping illumination source 35 provides the EDF 32 with pumping illumination through the photocoupler 33. The light signal which enters the EDF 32 is gradually amplified by stimulated emission of the EDF 32. In addition, the optical isolators 21, 24, 31, and 34 are arranged for preventing the pre-amp 2 and the post-amp 3 from bad influence of other components.

The embodiment is further comprised of a photocoupler 4, long wave pass filter (LWPF) 5 and an LWPF controller 6. The photocoupler 4 is put on input-stage of the EDFA1 for entering the light signal in the LWPF controller 6. The LWPF 5 is put on between the pre-amp 2 and the post-amp 3, and its cutoff wavelength can be adjustable. The cutoff wavelength is set up for 1530nm neighborhood. Thus, a short-wavelength-part of the light signal which is amplified by the pre-amp 2, is cut off by the LWPF 5. The LWPF controller 6 detects an input signal power of the input light signal and adjusts the cutoff wavelength of the LWPF5 based on the detected input signal power. The detected input signal power is larger, the LWPF controller 6 shifts the cutoff wavelength of the LWPF5 to shorter wavelength side for adjusting a gain of bands 1530nm.

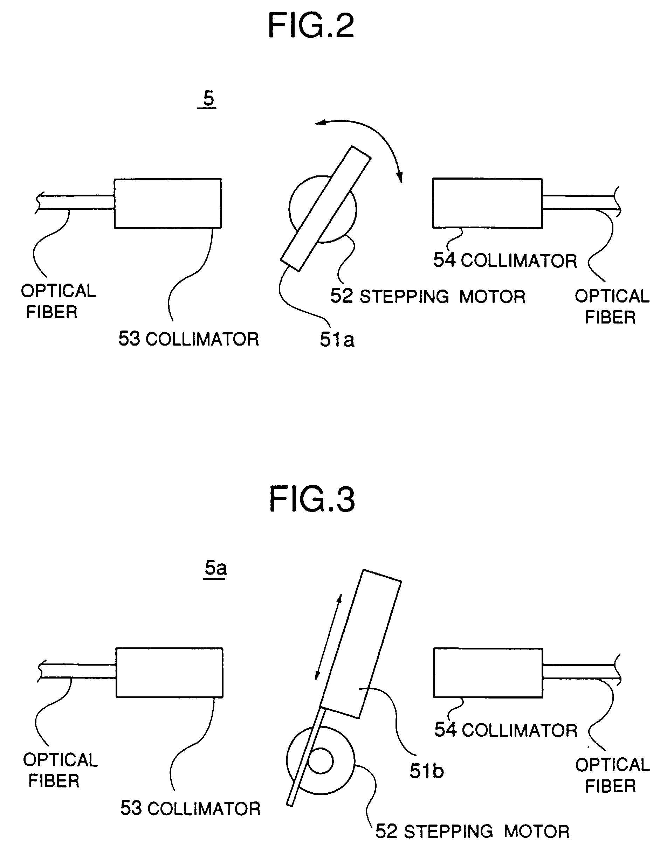

FIG.2 is a schematic diagram of the LWPF 5 of the FIG.1. An LWPF 51a is a conventional multiple layer dielectric plate, and the LWPF 5 is changed a central wavelength λ c by rotating the LWPF 51a. A rotation angle of the LWPF 51a is controlled by a stepping-motor 52. In that case, if an angle of the LWPF 51a approximates perpendicularly against the light signal which is irradiated from a collimator 53, the central wavelength λ c shifts to the long wavelength side, while the angle approximates horizontally, the central wavelength λ c shifts to the short wavelength side. However, when the central wavelength λ c shift to a short wavelength side, a polarization dependent loss(PDL) becomes large.

FIG.3 is a modified LWPF 5a. An LWPF 51b has a structure that the central wavelength λ c differs by a place. The LWPF 5a is changed the central wavelength λ c by shifting the LWPF 51b. Thus, the LWPF 5a can be irradiated the light signal from the collimator 53 to a place of appropriate central wavelength λ c. An amount of shift of the LWPF 51a is controlled by the stepping-motor 52 like the LWPF 5. The LWPF 5a makes the PDL can reduce to about 0.1dB below covering an intending entire wavelength region. The object of the first embodiment is to achieve the gain equalizing which is carried out regardless of the input signal power, and is covered signal-wavelength bands 1530∼1560nm. By using an Al-5Wt.% doped EDF as the EDF 23 and the EDF 32, gain equalizing of signal-wavelength bands 1540∼1560nm has been already achieved. Therefore, the gain equalizing is measured concerning signal-wavelength bands 1530(∼1540)nm. The Al-5Wt.% doped EDF has a gain peak on the signal-wavelength bands 1530nm, and as an input signal power Pin becomes large, a deviation of the gain peak from a equalized gain of the signal-wavelength bands 1540 ∼ 1560nm becomes small. And, when the input signal power Pin becomes fairly large, a gain saturation occurs and the gain becomes small beyond the other signal-wavelength bands. For this reason, equalization of the gain peak and avoidance of the gain saturation in the signal-wavelength bands 1530nm is necessary.

In the embodiment, the EDFA 1 has the LWPF 5 whose cutoff wavelength is adjustable, and the LWPF 5 is adjusted the cutoff wavelength according to the input signal power Pin. Then, the EDFA lean be changed a peak of gain of the signal-wavelength bands 1530nm . The LWPF 5 can be regard as an inverse characteristic filter, respect to the wavelength-to-gain characteristics of the extensive input signal power Pin. The reason the LWPF 5 is put on between the pre-amp 2 and the post-amp 3 is intended to avoid the gain saturation.

By the following reasons, the composition of the embodiment is more desirable.
(a) Noise components which is caused by an ASE arises from the EDF 23, can be filtered out from the amplified light signal.
(b) The LWPF 5 disables the gain saturation on amplifying of the post-amp 3, because of the peak of gain of the bands 1530nm has been equalized before entering the post-amp 3.

In addition, though composition of the embodiment can not remove noise components which is caused by the post-amp 3, since the light signal which possesses fairly power and carries few noise components in entered into the post-amp 3, even though noise is mixed by the post-amp 3, enough S/N ratio can be insured.

Concerning the embodiment, the gain equalizing has only to be achieved by the wavelength bands 1530∼1560nm of the light signal which is output from the post-amp 3. In other words, the gain of bands 1530nm needs to be not identical to the gain of bands 1540∼1560nm in the step which the light signal has output from the LWPF 5. To the extent that the gain of the light signal which is output from the LWPF 5 can achieve the gain equalizing of the light signal which is output from the post-amp3, it has only to be equalized. Corresponding to an output result from the post-amp3, the cutoff wavelength of LWPF5 is selected.

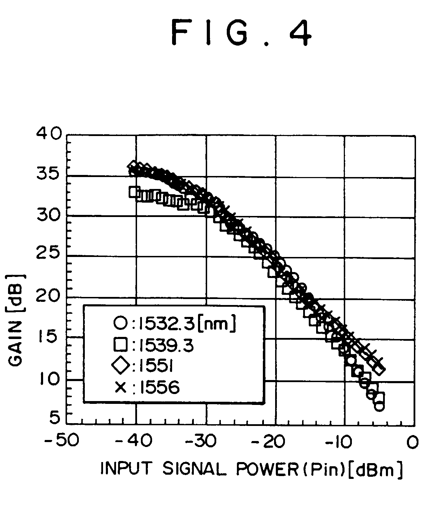

FIG.4 shows an experimental result of an input-signals-power-to-gain characteristics of 4 wavelengths concerning composition of the embodiment. The gain of the light signals which are output from the post-amp 3, are equalized ranging extensive input signal power Pin and covering the wavelength bands 1530∼1560nm.

### (B) SECOND EMBODIMENT

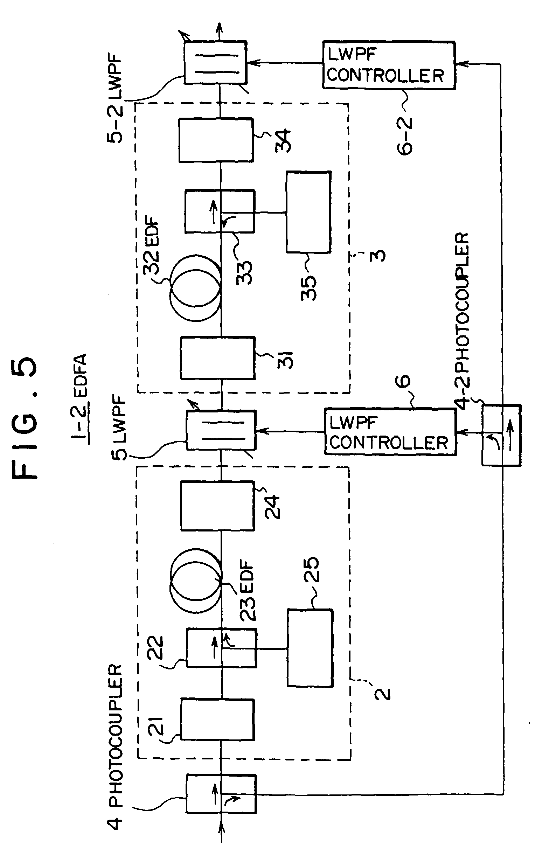

FIG.5 is a schematic diagram of a second embodiment of the invention. In FIG.5, an EDFA 1-2 is comprised of the LWPF 5 and an LWPF 5-2 whose cutoff wavelengths can be adjustable, for equalizing gain peak of bands 1530nm. The LWPF 5 is put on between the pre-amp 2 and the post-amp 3, and the LWPF 5-2 is put on the output side of the post-amp 3. And, in order to control the LWPF 5-2, an LWPF controller 6-2 and a photocoupler 4-2 comprise the EDFA 1-2. In other words, equalizer function responding to the gain peak of the input signal power of the bands 1530nm is made used to be realized by the LWPF 5 and 5-2. Therefore, the EDFA 1-2 can achieve the gain equalizing which ranges extensive input signal power Pin and covers wide wavelength bands. Moreover, according to the second embodiment, the noise components which is caused by the post-amp 3 can be removed by the LWPF 5-2.

### (C) THIRD EMBODIMENT

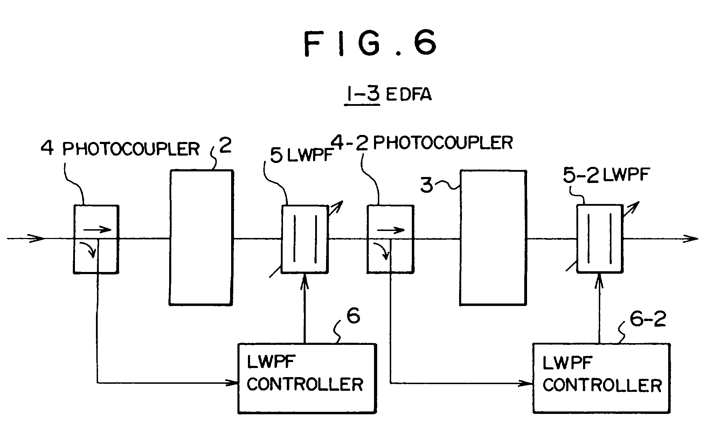

FIG.6 is a schematic diagram of a third embodiment of the invention. In FIG.6, an EDFA 1-3 is comprised of the photocoupler 4, the photocoupler 4-2, the LWPF 5, the LWPF 5-2, the LWPF controller 6 and the LWPF controller 6-2. The EDFA 1-3 differs from the EDFA 1-2 in an installation position of the photocoupler 4-2. Concerning the embodiment, a cutoff wavelength of the LWPF 5-2 is adjusted in response to the input signal power. Therefore, the EDFA 1-3 can achieve the gain equalizing which ranges extensive input signal power Pin and covers wide wavelength bands. Moreover, according to the third embodiment, the noise components which is caused by the post-amp 3 can be removed by the LWPF 5-2.

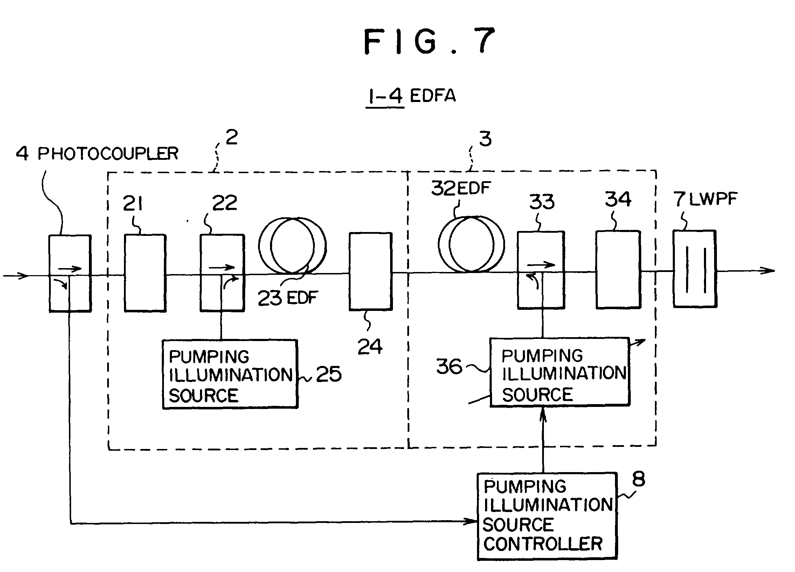

FIG.7 is a schematic diagram of an optical fiber amplifier which is not an embodiment of the invention. In FIG.7, an EDFA 1-4 comprising a pumping illumination source36 which is comprised of a laser diode(LD), a long wave pass filter(LWPF)7 whose cutoff wavelength is fixed and a pumping illumination source controller 8. The pumping illumination source 36 connects with the photocoupler 33, and its pumping illumination power can be variable. The pumping illumination source 36 provides the EDF 23 with pumping illumination through the photocoupler 33. The pumping illumination source controller 8 detects the input signal power of the input light signal and varies the pumping illumination power of the pumping illumination source 36 based on the detected input signal power. The detected input signal power is larger, the pumping illumination source controller 8 changes the pumping illumination power of the pumping illumination source 36 into larger pumping illumination power. The LWPF 7 is put on the output side of the post-amp 3, and a short-wavelength-part of the light signal which is amplified by the pre-amp 3 is cut off. The cutoff wavelength is fixed on 1530nm neighborhood.

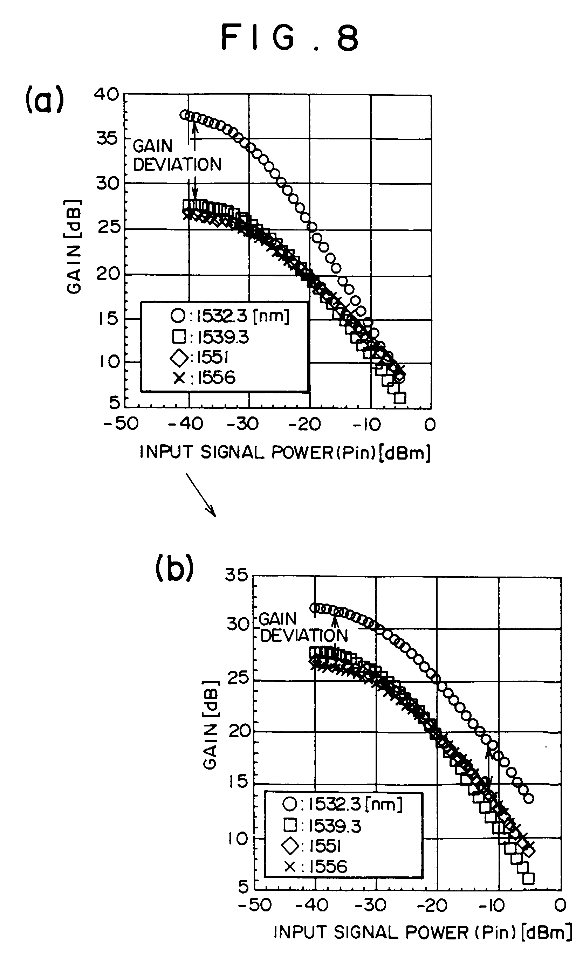

FIGs. 8(a) and 8(b) are fictitious graphs for explaining functions of the pumping illumination source controller 8 and the pumping illumination source 36. As shown in FIG. 8(a), the gain deviation exists between the gain of the bands 1540∼1560nm and the gain of the bands 1530nm. And, if the input signal power Pin becomes large, the gain deviation becomes small. If it is formed on a fixed value, the gain deviation can be removed by a fixed filter as shown in FIG. 8(b). In addition, when the gain deviation is turned into the fixed value, the gain of the bands 1530nm is made to improve in the range whose input signal power Pin is large. Accordingly, the gain saturation can be reduced. In the optical fiber amplifier, the EDFA 1-4 has the pumping illumination source 36 in order to change the gain deviation into the fixed value without regard to the input signal power, and has the LWPF 7 in order to remove the fixed value gain deviation.

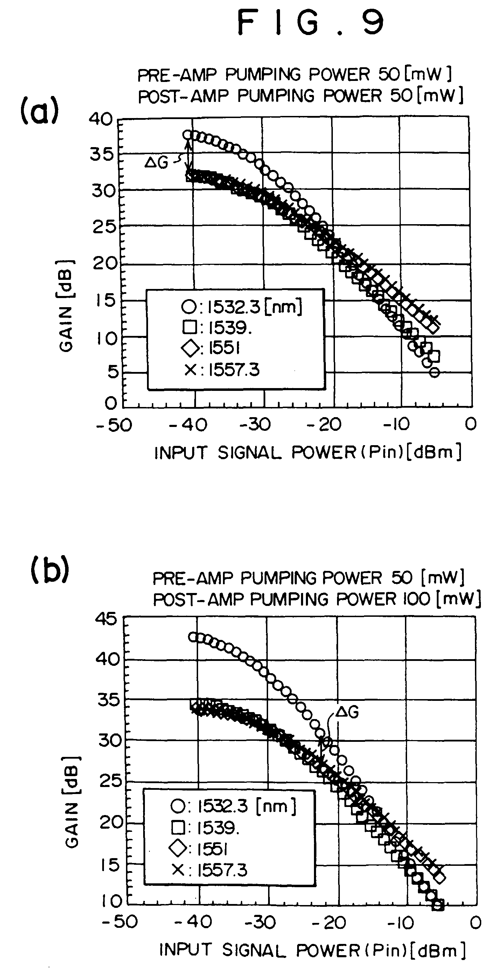

FIGs. 9(a) and 9(b) are/graphs showing input-signals-power-to-gain characteristics of the optical fiber amplifier. By changing the pumping illumination power corresponding to the input signal power Pin, the gain deviation can be changed into the fixed value. FIGs.9(a) and 9(b) shows experimental results of 4 wavelengths concerning composition of the optical fiber amplifier. In FIG.9(a), the pumping illumination power of the pre-amp 2 is 50mW, and the pumping illumination power of the post-amp 3 is 50mW. And, in FIG.9(b), the pumping illumination power of the pre-amp 2 is 50mW, and the pumping illumination power of the post-amp 3 is 100mW. Value of the input signal power Pin of -40dBm in FIG. 9(a) is defined as Δ G. On the other hand, in FIG. 9(b), when the input signal power Pin becomes about -22dBm, value of the gain deviation becomes Δ G. Therefore, the gain deviation can be made fixed as follow. If the input signal power Pin becomes -40dBm, the pumping illumination power of the post-amp 3 will be changed into 50mW, and if the Pin becomes -22dBm, the pumping illumination power will be changed into 100mW. By the pumping illumination power suitably selecting, even the input signal power Pin is other value, the gain deviation can be made fixed similarly.

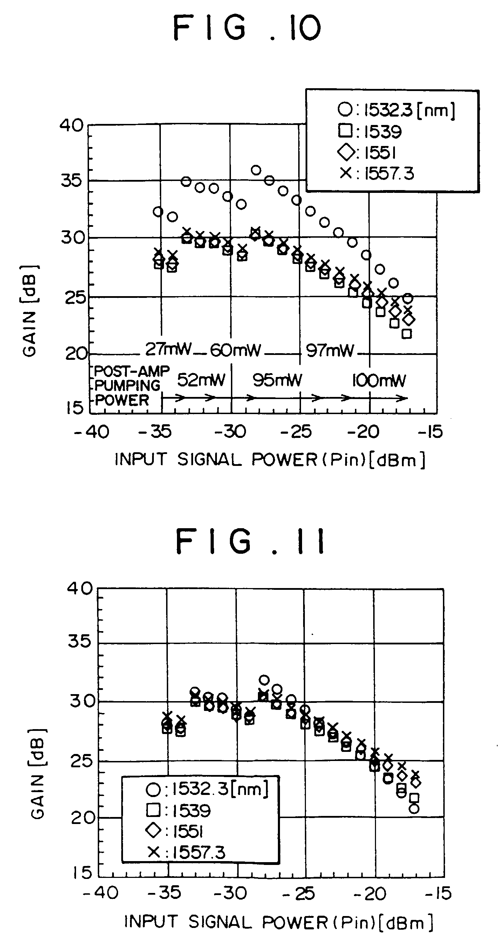

FIG.10 is a graph which shows an experimental result of input-signals-power-to-gain characteristics of the optical fiber amplifier. In FIG.10, the pumping illumination power of the post-amp 3 is changed gradually.

FIG.11 is a graph showing input-signals-power-to-gain characteristics after the light signal is passed through the LWPF 7. It is shown that the pumping illumination source 36 can change the gain deviation into the fixed value and the LWPF 7 can remove the fixed gain deviation.

### (D) FOURTH EMBODIMENT

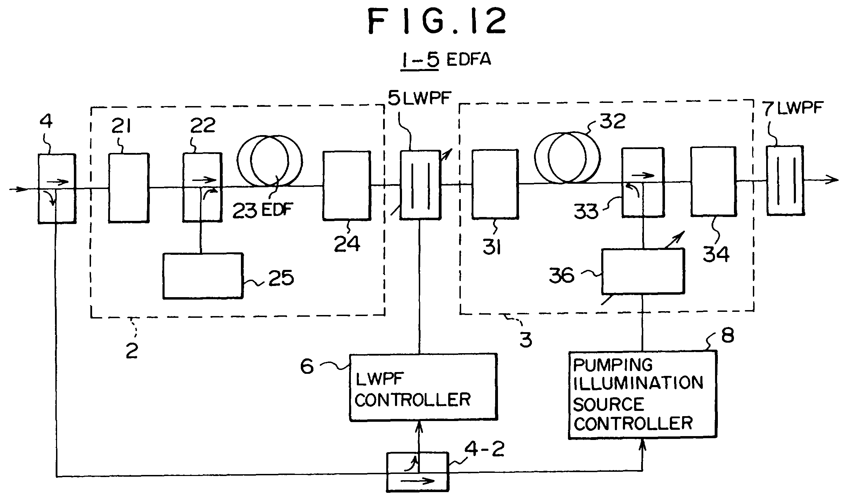

FIG.12 is a schematic diagram of a fourth embodiment of the invention. An EDFA 1-5 is comprised of the LWPF 5, the LWPF controller 6, the pumping illumination source 36 and a pumping illumination source controller 8. The LWPF 5 is put on between the pre-amp 2 and the post-amp 3, and its cutoff wavelength can be adjustable. Thus, the short-wavelength-part of the light signal which is amplified by the pre-amp 2, is cut off by the LWPF 5. The LWPF controller 6 detects the input signal power of the input light signal and adjusts the cutoff wavelength of the LWPF5 based on the detected input signal power. As it is clear from above-mentioned explanation, the fifth embodiment has two varieties of gain equalizing means, the pumping illumination source 36 whose power can be variable and the LWPF 5 whose cutoff wavelength can be adjustable. By these two varieties of the gain equalizing means, the EDFA 1-5 can equalize a gain of the bands1530nm with an equalized gain of the bands 1540∼1560nm, and an equalizing error is mutually compensated.

### (E) OTHER EMBODIMENTS

The invention can be applied to embodiments as follows still more.

Concerning above-mentioned each embodiments, it is the composition that the pre-amp 2 is adopted as the forward pumping and the post-amp 3 is adopted as the backward pumping. However, the pre-amp 2 may be adopted as the backward pumping and the bidirectional pumping. In addition, the post-amp 3 may he adopted as the forward pumping and the bidirectional pumping. Moreover, the invention can be applied to a single-stage optical fiber amplifier or a multistage(more than 3 stages) optical fiber amplifier. In the case of the single-stage, a cutoff wavelength adjustable LWPF is arranged on the side of output.

In addition, though the EDFA is shown concerning above-mentioned each embodiments, even though an optical fiber amplifier which is doped other rare-earth element, for example a praseodymium(Pr)-doped fiber or a neodymium(Nd)-doped fiber can be applied to the invention.

## Claims

1. An optical fiber amplifier comprising:
an optical fiber (23) for direct amplifying a light signal;
a pumping illumination source (25) for providing the optical fiber (23) with pumping illumination;
detecting means for detecting the input light signal;
gain equalizing means for equalizing the input light signal wavelength dependence of the fiber amplifier gain; and
a gain equalizing means controller (6) for controlling the gain equalizing means based on the input light signal detected by the detecting means (6), the gain equalizing means comprising a filter (5) having an adjustable cutoff wavelength.

2. The optical fiber amplifier according to claim 1, wherein the gain equalizing means controller (6) controls the filter (5) based on an input signal power of the detected input light signal, and if the input signal power is larger, the gain equalizing means controller (6) shifts the cutoff wavelength of the filter (5) to the shorter wavelength side.

3. The optical fiber amplifier according to claim 1 or 2, comprising:
a plurality of optical fibers (23, 33) for direct amplifying of a light signal, which are connected in series;
a plurality of pumping illumination sources (25, 35) for providing the plurality of optical fibers (23, 33) with pumping illumination.

4. The optical fiber amplifier according to claim 3, wherein the filter (5) is put on an input side of a first of the plurality of optical fibers (23, 33).

5. The optical fiber amplifier according to claim 3, wherein the filter (5) is put between two of the plurality of optical fibers (23, 33).

6. The optical fiber amplifier according to one of claims 3 to 5, wherein a filter (5) is put on an output side of a last of the plurality of optical fibers (23, 33).

7. The optical fiber amplifier according to claim 3, which comprises at least one pumping illumination source (36) having a variable pumping illumination power and a filter (5) having an adjustable cutoff wavelength as the gain equalizing means.

## Patentansprüche

1. Lichtleitfaser-Verstärker, mit:
einer Lichtleitfaser (23) zum direkten Verstärken eines Lichtsignals;
einer Pumpbeleuchtungsquelle (25) zum Versorgen der Lichtleitfaser (23) mit Pumpbeleuchtung;
einer Erfassungseinrichtung zum Erfassen des eingehenden Lichtsignals;
einer Verstärkungsentzerrungseinrichtung zum Entzerren der Wellenlängenabhängigkeit des eingehenden Lichtsignals von der Faserverstärker-Verstärkung; und
einem Verstärkungsentzerrungseinrichtung-Controller (6), der die Verstärkungsentzerrungseinrichtung anhand des von der Erfassungseinrichtung erfaßten eingehenden Lichtsignals steuert, wobei die Verstärkungsentzerrungseinrichtung ein Filter (5) mit einstellbarer Grenzwellenlänge umfaßt.

2. Lichtleitfaser-Verstärker nach Anspruch 1, wobei der Verstärkungsentzerrungseinrichtung-Controller (6) das Filter (5) anhand der Eingangssignalleistung des erfaßten Eingangslichtsignals steuert und die Grenzwellenlänge des Filters (5) mit zunehmender Eingangssignalleistung zur Seite kürzerer Wellenlängen verschiebt.

3. Lichtleitfaser-Verstärker nach Anspruch 1 oder 2, mit:
mehreren Lichtleitfasern (23, 33) zum direkten Verstärken eines Lichtsignals, die in Reihe geschaltet sind;
mehreren Pumpbeleuchtungsquellen (25, 35) zum Versorgen der mehreren Lichtleitfasern (23, 33) mit Pumpbeleuchtung.

4. Lichtleitfaser-Verstärker nach Anspruch 3, wobei das Filter (5) auf der Eingangsseite einer ersten der mehreren Lichtleitfasern (23, 33) angeordnet ist.

5. Lichtleitfaser-Verstärker nach Anspruch 3, wobei das Filter (5) zwischen zwei der mehreren Lichtleitfasern (23, 33) angeordnet ist.

6. Lichtleitfaser-Verstärker nach einem der Ansprüche 3 bis 5, wobei ein Filter (5) auf einer Ausgangsseite einer letzten der mehreren Lichtleitfasern (23, 33) angeordnet ist.

7. Lichtleitfaser-Verstärker nach Anspruch 3, der als Verstärkungsentzerrungseinrichtung wenigstens eine Pumpbeleuchtungsquelle (36) mit variabler Pumpbeleuchtungsleistung sowie ein Filter (5) mit einstellbarer Grenzwellenlänge umfaßt.

## Revendications

1. Amplificateur à fibre optique, comprenant :
une fibre optique (23) pour l'amplification directe d'un signal lumineux ;
une source d'éclairement de pompage (25) pour appliquer à la fibre optique (23) un éclairement de pompage ;
un moyen de détection pour détecter le signal lumineux d'entrée ;
un moyen d'égalisation du gain pour égaliser la dépendance du gain de l'amplificateur à fibre vis-à-vis de la longueur d'onde du signal lumineux d'entrée ; et
un dispositif de commande de moyen d'égalisation de gain (6) pour commander le moyen d'égalisation du gain sur la base du signal lumineux d'entrée détecté par le moyen de détection, le moyen d'égalisation du gain comprenant un filtre (5) ayant une longueur d'onde de coupure réglable.

2. Amplificateur à fibre optique selon la revendication 1, dans lequel le dispositif de commande (6) du moyen d'égalisation du gain commande le filtre (5) sur la base d'une puissance de signal d'entrée du signal lumineux d'entrée détecté, et si la puissance de signal d'entrée est plus élevée, le dispositif de commande (6) du moyen d'égalisation du gain décale la longueur d'onde de coupure du filtre (5) vers le côté à plus faible longueur d'onde.

3. Amplificateur à fibre optique selon la revendication 1 ou 2, comprenant :
une pluralité de fibres optiques (23, 33) pour l'amplification directe d'un signal lumineux, qui sont connectées en série ;
une pluralité de sources d'éclairement de pompage (25, 35) pour appliquer à la pluralité de fibres optiques (23, 33) un éclairement de pompage.

4. Amplificateur à fibre optique selon la revendication 3, dans lequel le filtre (5) est placé sur un côté d'entrée d'une première de la pluralité de fibres optiques (23, 33).

5. Amplificateur à fibre optique selon la revendication 3, dans lequel le filtre (5) est placé entre deux de la pluralité de fibres optiques (23, 33).

6. Amplificateur à fibre optique selon l'une des revendications 3 à 5, dans lequel un filtre (5) est placé sur un côté de sortie d'une dernière de la pluralité de fibres optiques (23, 33).

7. Amplificateur à fibre optique selon la revendication 3, comprenant au moins une source d'éclairement de pompage (36) ayant une puissance d'éclairement de pompage variable et un filtre (5) ayant une longueur d'onde de coupure réglable en tant que moyen d'égalisation du gain.
